# EUROPEAN PATENT APPLICATION

(11) **EP 4 586 302 A1**
(43) Date of publication of application: **16.07.2025**
(21) Application number: 25150338.9
(22) Date of filing: 06.01.2025
(51) Int. Cl.: H01J 49/00, G01N 30/72, G01N 30/86

(54) **CHROMATOGRAPH MASS SPECTROMETRY APPARATUS AND CHROMATOGRAPH MASS ANALYSIS METHOD**

(30) Priority: 15.01.2024 JP 2024004070
(71) Applicant: JEOL Ltd., Akishima-shi, Tokyo 196-8558 (JP)
(72) Inventor: SANUKI, Naoya, Tokyo, 196-8558 (JP); KOU, Junkei, Tokyo, 196-8558 (JP); FUJII, Masatoshi, Tokyo, 196-8558 (JP); TANIYAMA, Kazuhiro, Tokyo, 196-8558 (JP)
(74) Representative: Boult Wade Tennant LLP

(57) **Abstract**

A plurality of measurement intervals (Sa1 to Sa5) are set on a retention time axis based on a plurality of compound peak observation periods. A start time and a completion time of each measurement interval (Sa1 to Sa5) are corrected so as to prevent occurrence of a blank period (remainder time) (r1 to r5) between two measurement intervals which are timewise adjacent to each other, to thereby determine an actual start time and an actual completion time of each measurement interval (Sb1 to Sb5) after correction. Specifically, the actual start time of an ith cycle measurement interval is made to coincide with the actual completion time of an (i-1)th cycle measurement interval.

## Description

### TECHNICAL FIELD

The present disclosure relates to a mass spectrometry apparatus and a mass analysis method, and in particular to a technique for setting a plurality of cycle measurement intervals.

### BACKGROUND

A mass spectrometry system is formed from, for example, a gas chromatograph and a mass spectrometry apparatus (for example, refer to Document 1 (JP 2019-211301 A)). In the gas chromatograph, a plurality of compounds are separated from a sample. In the mass spectrometry apparatus, mass spectrometry is performed on each of the separated compounds.

For example, a mass spectrometry apparatus having a first mass analyzer and a second mass analyzer has an SRM (Selected Reaction Monitoring) mode. The SRM mode is also called an MRM (Multiple Reaction Monitoring) mode. The SRM mode is similar to an SIM (Selected Ion Monitoring) mode from the viewpoint of cyclically and sequentially selecting a plurality of mass-to-charge ratios.

In the SRM mode, for example, a plurality of cycle measurement intervals (hereinafter also simply referred to as "measurement intervals") are set on a retention time axis, based on a plurality of compound peak observation periods which are set on the retention time axis. In each measurement interval, a measurement sequence for detecting a plurality of kinds of ions in a time-divisional manner is repeatedly executed. A repetition period of the measurement sequence is also called a cycle time (loop time). The cycle time is time required for executing the measurement sequence once.

In a plurality of ion detection processes forming one measurement sequence, a plurality of operation conditions corresponding to a plurality of transitions are set. A "transition" corresponds to a combination of a mass-to-charge ratio of a precursor ion selected in the first mass analyzer and a mass-to-charge ratio of a product ion selected in the second mass analyzer. In modes other than the SRM mode (for example, the SIM mode) also, a plurality of measurement intervals are set based on the plurality of compound peak observation periods.

In each measurement interval, when a time length of the measurement interval does not coincide with an integer multiple of the cycle time, a remainder time which is shorter than the cycle time occurs at the end of the measurement interval. The remainder time is a blank time in which no measurement is performed, and is thus wasteful time.

Document 2 (JP 2012-132799 A) discloses a technique for adjusting the compound peak observation period (length of a measurement event). Document 3 (WO 2016/002046) discloses a technique for adjusting an ion detection time (event time). Document 4 (US 10,892,152 B) discloses a technique for adjusting the ion detection time (dwell time). None of Documents 1 to 4 discloses a technique to prevent occurrence of a wasteful time between two measurement intervals which are timewise adjacent to each other.

An advantage of the present disclosure lies in preventing occurrence of a wasteful time between two cycle measurement intervals which are timewise adjacent to each other. Alternatively, an advantage of the present disclosure lies in optimizing a start time and a completion time of each cycle measurement interval.

### SUMMARY

According to one aspect of the present disclosure, there is provided a mass spectrometry apparatus comprising: a first table for managing a plurality of compound peak observation periods which are set on a retention time axis; a second table for managing a plurality of cycle measurement intervals which are set on the retention time axis based on the plurality of compound peak observation periods; and a processor configured to correct a start time and a completion time of each of the cycle measurement intervals so as to prevent occurrence of a blank period between two cycle measurement intervals which are timewise adjacent to each other, to thereby determine an actual start time and an actual completion time of each of the cycle measurement intervals.

According to another aspect of the present disclosure, there is provided a mass analysis method comprising: a step of setting a plurality of cycle measurement intervals on a retention time axis based on a plurality of compound peak observation periods which are set on the retention time axis; and a step of correcting a start time and a completion time of each of the cycle measurement intervals so as to prevent occurrence of a blank period between two cycle measurement intervals which are timewise adjacent to each other, to thereby determine an actual start time and an actual completion time of each of the cycle measurement intervals.

### BRIEF DESCRIPTION OF DRAWINGS

Embodiment(s) of the present disclosure will be described based on the following figures, wherein:
FIG. 1 is a block diagram showing an example structure of a mass spectrometry system according to an embodiment of the present disclosure;
FIG. 2 is a diagram showing an example of a compound table;
FIG. 3 is a diagram showing an example of a measurement interval table;
FIG. 4 is a diagram showing a remainder time which occurs at an end of each measurement interval;
FIG. 5 is a diagram showing a correction method according to the embodiment of the present disclosure;
FIG. 6 is a flowchart showing an example operation according to the embodiment of the present disclosure;
FIG. 7 is a diagram showing a waveform according to a comparative example;
FIG. 8 is a diagram showing a waveform according to the embodiment of the present disclosure;
FIG. 9 is a flowchart showing selection of a correction mode and a non-correction mode;
FIG. 10 is a diagram showing a first alternative configuration; and
FIG. 11 is a diagram showing a second alternative configuration.

### DESCRIPTION OF EMBODIMENTS

An embodiment of the present disclosure will now be described with reference to the drawings.

### (1) Overview of Embodiment

A mass spectrometry apparatus according to an embodiment of the present disclosure comprises: a fist table; a second table; and a processor. The first table is a table for managing a plurality of compound peak observation periods which are set on a retention time axis. The second table is a table for managing a plurality of cycle measurement intervals which are set on the retention time axis based on the plurality of compound peak observation periods. The processor is configured to correct a start time and a completion time of each of the cycle measurement intervals so as to prevent occurrence of a blank period between two cycle measurement intervals which are timewise adjacent to each other, to thereby determine an actual start time and an actual completion time of each of the cycle measurement intervals.

According to the above-described structure, because no wasteful time occurs between two cycle measurement intervals which are timewise adjacent to each other, problems such as a missing sample point and local increase of a sample point spacing do not occur during sampling of a compound peak waveform.

The above-described blank period is a wasteful period in which, although a measurement can be performed, the measurement is actually not performed. A time required for the operation of a mass spectrometer, such as a time for setting an operation condition, is not included in the blank period. Each of the start time and the completion time of each cycle measurement interval is a planned time, a provisional time, or a time before correction. On the contrary, each of the actual start time and the actual completion time of each cycle measurement interval is a corrected time. The cycle measurement interval is a period in which a measurement sequence for detecting a plurality of kinds of ions in order is executed repeatedly. The cycle measurement interval may be alternatively called a loop measurement interval. Each compound peak observation period is in general a period which is set on the retention time axis, and is a period including a period in which each compound peak is produced.

Alternatively, a portion, among all of the cycle measurement intervals, may be set as a correction target. So long as the blank period is excluded, there may be a start time, among the plurality of start times, which is maintained after the correction, or there may be a completion time, among the plurality of completion times, which is maintained after the correction.

In an embodiment, the processor is further configured to, while incrementing a parameter i by 1, wherein i is an integer greater than or equal to 2: determine an actual start time of an ith cycle measurement interval based on an actual completion time of an (i-1)th cycle measurement interval. Further, the processor is configured to determine an actual completion time of the ith cycle measurement interval according to the actual start time of the ith cycle measurement interval and a cycle time applied to the ith cycle measurement interval.

By coinciding the actual start time of the ith cycle measurement interval to the actual completion time of the (i-1)th cycle measurement interval, it is possible to exclude the blank period between the (i-1)th cycle measurement interval and the ith cycle measurement interval. When the blank period does not occur immediately before a certain cycle measurement interval, the start time of this cycle measurement interval may be determined as the actual start time thereof as-is.

When a front-shortening (moving up) scheme is chosen as the scheme for excluding the blank period, the processor is configured to: determine the actual completion time of the ith cycle measurement interval at a time before a completion time of the ith cycle measurement interval (that is, the start time of the (i+1)th cycle measurement interval). According to the front-shortening scheme, because the number of executions of the measurement sequence in the ith cycle measurement interval is maintained, the control of the operation of the mass spectrometer can be simplified. In this case, an amount of front-shortening of the (i+1)th cycle measurement interval is a shorter time in relation to the cycle time applied to the ith cycle measurement interval.

When an extension scheme is chosen as the scheme for excluding the blank period, the processor is configured to: determine the actual completion time of the ith cycle measurement interval at a time after a completion time of the ith cycle measurement interval (that is, the start time of the (i+1)th cycle measurement interval). According to the extension scheme, normally, the number of executions of the measurement sequence in the ith cycle measurement interval is increased by 1. In this case, an amount of back movement of the actual start time of the (i+1)th cycle measurement interval (that is, the amount of extension of the ith cycle measurement interval) is a shorter time in relation to the cycle time applied to the ith cycle measurement interval.

When a selection scheme is chosen as the scheme for excluding the blank period, the processor is configured to: compute a difference time between a completion time expected in the ith cycle measurement interval and a start time of the (i+1)th cycle measurement interval. The processor is configured to: then choose a method of determining the actual completion time of the ith cycle measurement interval based on the difference time. In this case, the difference time may be compared with another time. Examples of the other time include a cycle time applied to the (i+1)th cycle measurement interval, the amount of extension when the extension scheme is employed, a threshold which is set in advance, and the like. The completion time described above is an expected completion time when the measurement sequence is executed repeatedly for the maximum number of times without exceeding the completion time of the ith cycle measurement interval.

When a first method is chosen as the above-described method, the processor is configured to determine the actual completion time of the ith cycle measurement interval at a time before a completion time of the ith cycle measurement interval. That is, in this case, the front-shortening scheme is employed. On the other hand, when a second method is chosen as the above-described method, the processor is configured to determine the actual completion time of the ith cycle measurement interval at a time after a completion time of the ith cycle measurement interval. That is, in this case, the extension scheme is employed.

In an embodiment, the processor has a function to execute a correction mode, and a function to execute a non-correction mode. In the correction mode, the start time and the completion time of each of the cycle measurement intervals are corrected so as to prevent occurrence of the blank period, so that the actual start time and the actual completion time of each of the cycle measurement intervals are determined. In the non-correction mode, the start time and the completion time of each of the cycle measurement intervals are employed as-is, without being corrected.

According to the structure described above, the advantage due to the correction of the cycle measurement intervals can be obtained, and, at the same time, occurrence of a disadvantage due to the correction can be prevented. As the advantage described above, prevention of a missing sample point can be exemplified. As the disadvantage described above, a significant deviation of an actual cycle measurement interval with respect to a planned cycle measurement interval can be exemplified.

According to an embodiment, the processor is configured to select the correction mode or the non-correction mode based on a cycle time applied to each of the cycle measurement intervals. More specifically, the processor is configured to: select the correction mode when the cycle time is smaller than a threshold; and select the non-correction mode when the cycle time is larger than the threshold. In an embodiment, the cycle time corresponds to an upper limit of an amount of correction. When the upper limit of the amount of correction is greater than the threshold, the execution of the correction mode is restricted.

A mass spectrometry apparatus according to an embodiment of the present disclosure further comprises: a first mass analyzer; a collision cell; a second mass analyzer; and a detector. The first mass analyzer performs first mass analysis on ions generated from a sample. The collision cell accumulates and discharges ions that have passed through the first mass analyzer. The second mass analyzer performs second mass analysis on ions discharged from the collision cell. The detector detects ions that have passed through the second mass analyzer. The processor is configured to control operations of the first mass analyzer, the collision cell, and the second mass analyzer according to a measurement sequence applied to each of the cycle measurement intervals. An execution condition of the correction mode may be determined according to the accumulation time and the discharge time of the collision cell, or whether or not the correction mode is to be executed may be judged according to the accumulation time and the discharge time of the collision cell.

A mass analysis method according to an embodiment of the present disclosure comprises a setting step and a correction step. In the setting step, a plurality of cycle measurement intervals are set on a retention time axis based on a plurality of compound peal observation periods which are set on the retention time axis. In the correction step, a start time and a completion time of each of the cycle measurement intervals are corrected so as to prevent occurrence of a blank period between two cycle measurement intervals which are timewise adjacent to each other, to thereby determine an actual start time and an actual completion time of each of the cycle measurement intervals.

A program for executing the above-described mass analysis method is installed in an information processing apparatus via a network or via a transportable recording medium. The information processing apparatus has a non-transitory recording medium which stores the program. The information processing apparatus corresponds to a mass spectrometry system or a mass spectrometry apparatus, or is an information processing apparatus in a mass spectrometry system.

### (2) Details of Embodiment

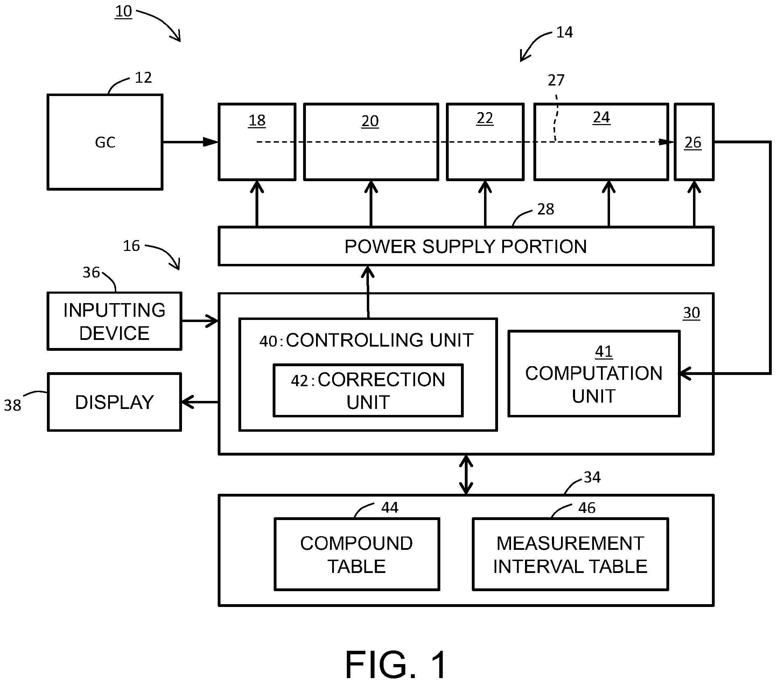

FIG. 1 shows an example structure of a mass spectrometry system according to an embodiment of the present disclosure. A mass spectrometry system 10 illustrated in FIG. 1 comprises a gas chromatograph (GC) 12, a mass spectrometer 14, and an information processing apparatus 16. A mass spectrometry apparatus is formed by the mass spectrometer 14 and the information processing apparatus 16. The mass spectrometer 14 operates according to an operation mode selected from a plurality of operation modes. The plurality of operation modes include a scan mode, an SIM mode, and an SRM mode. A structure and an operation of the mass spectrometry system 10 will now be described presuming execution of the SRM mode.

The gas chromatograph 12 has a column for separating or extracting a plurality of compounds from a sample. The plurality of compounds that are separated are sequentially sent to the mass spectrometer 14. Alternatively, a liquid chromatograph may be provided in place of the gas chromatograph 12.

The mass spectrometer 14 comprises an ion source 18, a first mass analyzer 20, a collision cell 22, a second mass analyzer 24, a detector 26, and a power supply portion 28. The collision cell 22 is provided as necessary. The ion source 18 is, for example, an ion source which follows an electron ionization method. Alternatively, an ion source which follows other ionization methods may be provided. In the ion source 18, each of the compounds separated from the sample is ionized.

The first mass analyzer 20 is formed from, for example, a quadrupole mass analyzer. The first mass analyzer 20 is a mass filter which permits only ions having a selected mass-to-charge ratio (m/z) to pass therethrough. The collision cell 22 has a quadrupole, and contains a collision gas therein. Ions (precursor ions) collide on the collision gas, causing dissociation of the ions, and product ions are generated. The collision cell 22 in the embodiment repeats accumulation of ions and discharge of the accumulated ions within an ion detection period (transition setting period). A transition corresponds to a combination of the mass-to-charge ratio of the precursor ion and the mass-to-charge ratio of the product ion.

The second mass analyzer 24 is formed from, for example, a quadrupole mass analyzer. The second mass analyzer 24 is a mass filter which permits only ions having a designated mass-to-charge ratio to pass through. The ions which have passed through the second mass analyzer are detected by the detector 26. A detection signal which is output from the detector 26 is sent to the information processing apparatus 16 via a signal processing circuit (not shown).

Electric power is supplied from the power supply portion 28 to the ion source 18, the first mass analyzer 20, the collision cell 22, the second mass analyzer 24, and the detector 26, and a voltage signal is also supplied. The information processing apparatus 16 controls the operations of the mass spectrometer 14 through control of the power supply portion 28.

The information processing apparatus 16 is formed from a computer. The information processing apparatus 16 comprises a processor 30 and a memory 34. The processor 30 is formed from a CPU which executes a program. The memory 34 is a semiconductor memory. The information processing apparatus 16 further includes an inputting device 36 and a display 38. The inputting device 36 is formed from a keyboard, a pointing device, or the like. The display 38 is formed form a liquid crystal display or the like.

The processor 30 functions as a controlling unit 40 and a computation unit 41. The controlling unit 40 has, in addition to the function to control the operations of the mass spectrometer 14, a function to set a plurality of compound peak observation periods, a function to set a plurality of measurement intervals (a plurality of cycle measurement intervals) based on the plurality of compound peak observation periods, a function to correct the plurality of measurement intervals, or the like. In FIG. 1, the function to correct the plurality of measurement intervals is expressed as a correction unit 42.

The computation unit 41 has a mass spectrum generation function, a chromatogram generation function, and the like. The display 38 displays a mass spectrum, a chromatogram, and the like. By a user using the inputting device 36, a cycle time or a target cycle time applied commonly over a plurality of measurement intervals is input, or the cycle time or the target cycle time is input for each measurement interval. The target cycle time is a reference value when the cycle time is automatically set in consideration of various conditions.

A mass spectrometry apparatus according to the embodiment (that is, the mass spectrometer 14 and the information processing apparatus 16) has a correction mode and a non-correction mode. During execution of the correction mode, the plurality of measurement intervals that are planned are corrected, and the operations of the mass spectrometer 14 are controlled based on the plurality of measurement intervals after the correction. During execution of the non-correction mode, the operations of the mass spectrometer 14 are controlled according to the plurality of measurement intervals which are planned. The structure and the operation of the information processing apparatus 16 will now be described primarily presuming the correction mode.

The memory 34 has a compound table 44 serving as a first table, and a measurement interval table 46 serving as a second table. The compound table 44 is a table for managing the plurality of compound peak observation periods. The measurement interval table 46 is a table for managing a plurality of measurement intervals (a plurality of cycle measurement intervals) which are set based on the plurality of compound peak observation periods.

In the correction mode, a time length of each measurement interval is corrected by the correction unit 42 to an integer multiple of a period of the cycle measurement executed in the measurement interval. That is, a start time and a completion time of each measurement interval are corrected so as to prevent occurrence of a blank period. With this configuration, an actual start time and an actual completion time of each measurement interval are determined.

The start time is a planned start time; that is, the start time before correction. The completion time is a planned completion time; that is, the completion time before correction. The actual start time is the start time after the correction, and the actual completion time is the completion time after the correction. In the non-correction mode, the start time and the completion time of each measurement interval are employed as-is. In this case, a time difference which is shorter than the period of the cycle measurement is caused between the completion time and the actual completion time of each measurement interval, and this time difference may be considered as a remainder time. The remainder time will be described later in detail.

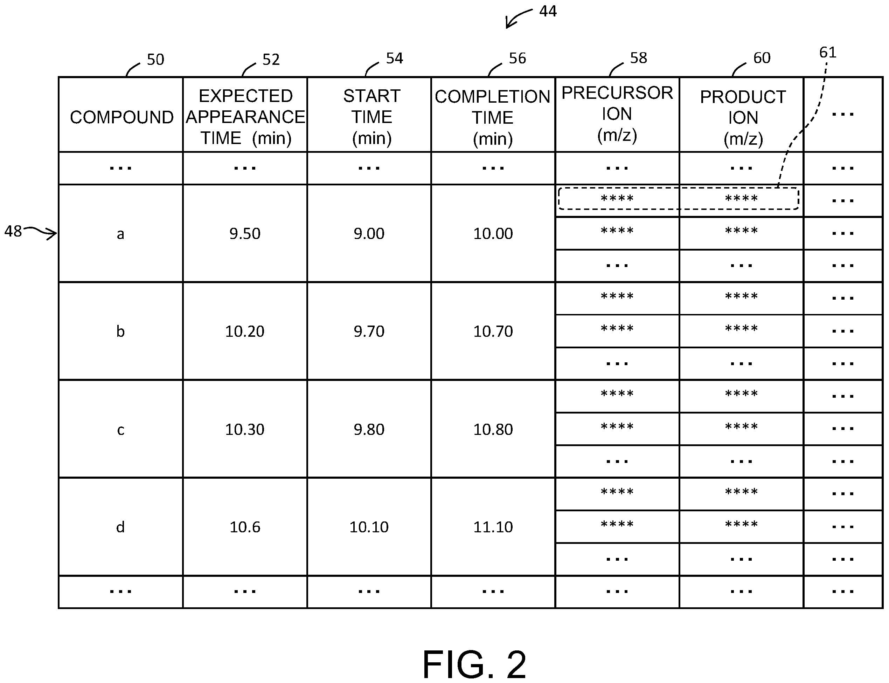

FIG. 2 shows an example of the compound table 44. The compound table 44 has a plurality of records 48 corresponding to the plurality of compounds separated from the sample. Each record 48 includes information 50 for identifying a compound, information 52 indicating an expected appearance time of a compound peak, information 54 indicating a start time of a compound peak observation period, information 56 indicating a completion time of the compound peak observation period, information 58 indicating a mass-to-charge ratio of a precursor ion, and information 60 indicating a mass-to-charge ratio of a product ion.

The combination of the mass-to-charge ratio of the precursor ion and the mass-to-charge ratio of the product ion is a transition 61. One record 48 normally includes a plurality of transitions 61. For example, one record 48 includes one transition corresponding to a target ion, and one or a plurality of transitions corresponding to a qualifier ion.

In each record 48, the expected appearance time of the compound peak, the start time of the compound peak observation period, and the completion time of the compound peak observation period are normally set in advance. Alternatively, these pieces of information may be set based on a designation of the user.

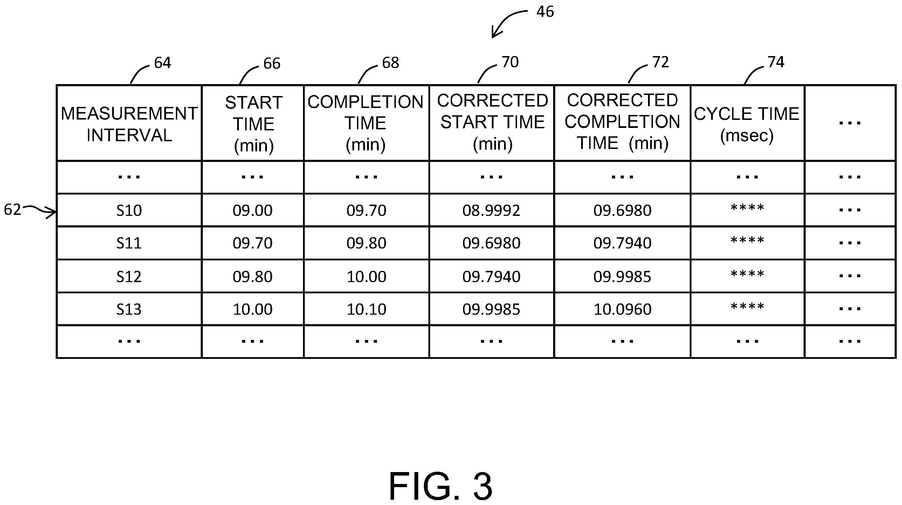

FIG. 3 shows an example of the measurement interval table 46. The measurement interval table 46 has a plurality of records 62 corresponding to a plurality of measurement intervals. The plurality of measurement intervals are automatically set based on a polymerization state of the plurality of compound peak observation periods. Alternatively, the plurality of measurement intervals may be set based on a designation of the user.

Each record 62 includes information 64 for identifying a measurement interval, information 66 indicating a start time, information 68 indicating a completion time, information 70 indicating a start time after correction (actual start time), information 72 indicating a completion time after correction (actual completion time), information 74 indicating a repetition period (cycle time) of the measurement sequence, or the like. The cycle time is determined for each measurement interval, or a common cycle time is determined over a plurality of measurement intervals. The cycle time may be designated by the user or may be automatically determined.

In the correction mode, the actual start time and the actual completion time are computed, and are registered in the measurement interval table 46. Alternatively, these times may be registered in other tables. In the non-correction mode, the computations of the actual start time and the actual completion time are not performed.

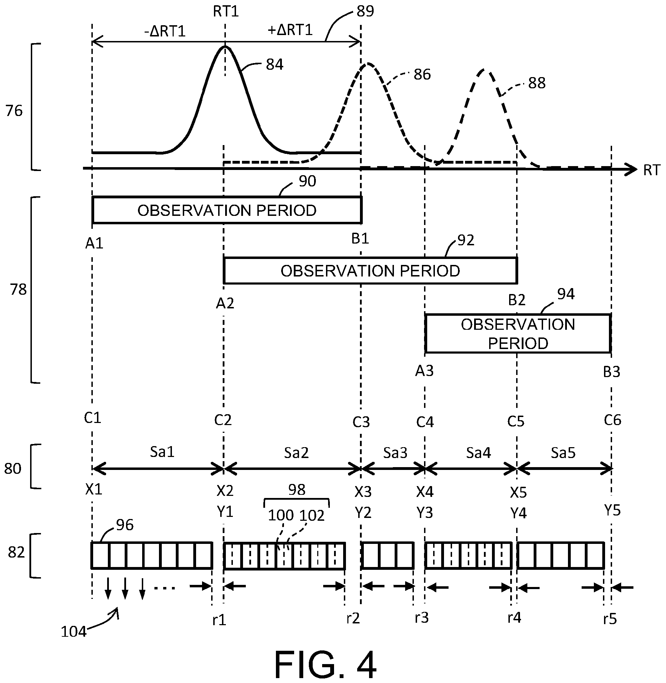

With reference to FIG. 4, setting of the plurality of measurement intervals based on the plurality of compound peak observation periods, and a plurality of remainder times caused in the plurality of measurement intervals will be described. In FIG. 4, the horizontal axis is a retention time (RT) axis. In FIG. 4, the time of flight of the ions in the mass spectrometer; that is, the delay time, is not reflected.

A chromatogram 76 includes a plurality of compound peaks 84, 86, and 88. Reference numeral 78 indicates a group of compound peak observation periods. The group of compound peak observation periods 78 is formed from three compound peak observation periods 90, 92, and 94. For example, the compound peak observation period 90 is a period centered at an expected appearance time RT1 and widening in a positive direction and a negative direction, with a widening width in each direction of ΔRT1. For each of the compound peak observation periods 90, 92, and 94, a measurement condition for measuring the compound ion is correlated.

More specifically, the compound peak observation period 90 is a period from a start time A1 to a completion time B1, the compound peak observation period 92 is a period from a start time A2 to a completion time B2, and the compound peak observation period 94 is a period from a start time A3 to a completion time B3.

Based on the group of compound peak observation periods 78, a group of measurement intervals 80 is set. Specifically, based on break times C1 to C6 defined by the plurality of start times A1 to A3 and the plurality of completion time B1 to B3, the group of measurement intervals 80 is set, which is formed from 5 measurement intervals including measurement intervals Sa1 to Sa5. Each of the measurement intervals Sa1 to Sa 5 is an interval before correction.

The measurement interval Sa1 is an interval from a start time X1 to a completion time Y1. The start time X1 coincides with the start time A1. The measurement interval Sa2 is an interval from a start time X2 to a completion time Y2. The start time X2 coincides with the start time A2, and also with the completion time Y1. The measurement interval Sa3 is an interval from a start time X3 to a completion time Y3. The start time X3 coincides with the completion time B1 and also with the completion time Y2. The measurement interval Sa4 is an interval from a start time X4 to a completion time Y4. The start time X4 coincides with the start time A3, and also with the completion time Y3. The measurement interval Sa5 is an interval from a start time X5 to a completion time Y5. The start time X5 coincides with the completion time B2, and also with the completion time Y4. The completion time Y5 coincides with the completion time B3.

Reference numeral 82 indicates 5 packet arrays corresponding to 5 measurement intervals Sa1 to Sa5. Each packet array is formed from a plurality of packets 96 and 98 successive on the retention time axis. Each of the packets 96 and 98 corresponds to execution of one time of the measurement sequence. A number of packets represents a number of executions of the measurement sequence. A width of each of the packets 96 and 98 represents the cycle time. Each individual measurement sequence is formed from a plurality of ion detection operations for detecting a plurality of kinds of ions. Each individual ion detection operation includes ion accumulation and discharge operations of one time or a plurality of times in the collision cell.

The packet 98 represents the measurement sequence of one time executed within the measurement interval Sa2. Specifically, the packet 98 is formed from a portion 100 corresponding to a plurality of ion detection operations for observing the compound peak 84, and a portion 102 corresponding to a plurality of ion detection operations for observing the compound peak 86.

Because the group of measurement intervals 80 is defined based on the group of compound peak observation periods 78, normally, the time length of each of the measurement intervals Sa1 to Sa5 does not equal to an integer multiple of the cycle time applied to the measurement interval. When the time length of each measurement interval is divided by the cycle time applied to each measurement interval, a quotient Q and a remainder R result. The quotient Q corresponds to the number of executions of the measurement sequence. The remainder R corresponds to the remainder time. At the ends of the measurement intervals Sa1 to Sa5, remainder times r1 to r5, which are shorter than the cycle time, inevitably occur. The remainder times r1 to r5 are times in which the ion measurement is not performed, and are thus blank periods.

Reference numeral 104 indicates a plot timing. A plurality of detection values corresponding to a plurality of kinds of ions, acquired through execution of the measurement sequence of one time, are sequentially plotted on a chromatograph coordinate system. Normally, the plurality of detection values acquired through the measurement sequence of one time are plotted on the same coordinate in the horizontal direction (reference time). When the remainder times r1 to r5 occur, the plot spacing is temporarily widened due to influences of these remainder times. With this event, quality of a compound peak waveform is degraded.

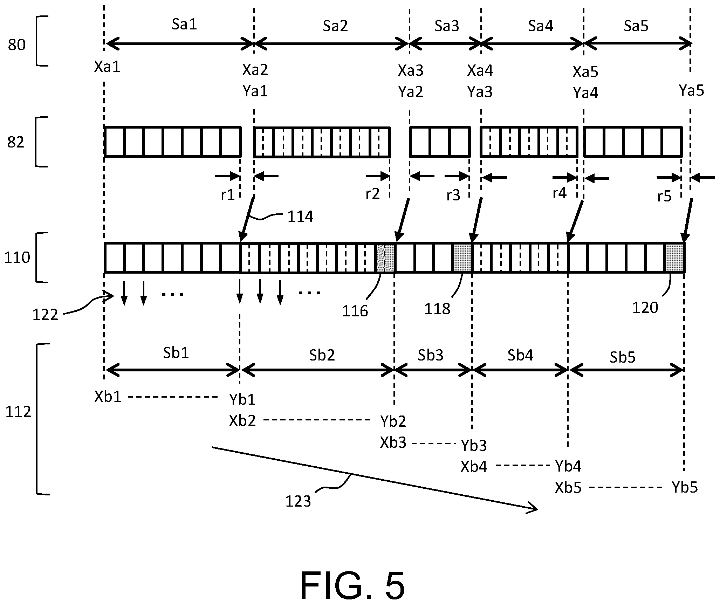

FIG. 5 shows a correction method according to the embodiment of the present disclosure. The correction method according to the embodiment is a correction method which follows a front-shortening scheme. The group of measurement intervals 80 and five packet arrays 82 in FIG. 5 are identical to those shown in FIG. 4.

Reference numeral 110 indicates 5 packet arrays after the correction. Reference numeral 112 indicates the group of measurement intervals after the correction.

An actual start time Xb1 of a first measurement interval Sb1 is identical to a start time Xa1 before the correction. An actual completion time Yb1 of the first measurement interval Sb1 is specified by dividing a time length from the actual start time Xb1 of the first measurement interval Sb1 to a completion time Ya1 (completion time before correction) of the first measurement interval Sb1 by the cycle time applied to the first measurement interval Sb1. More specifically, the actual completion time Yb1 is specified by multiplying the quotient obtained by the division described above by the cycle time. Alternatively, the actual completion time Yb1 is specified by subtracting the remainder from the completion time Ya1 before the correction.

While the completion time of the first measurement interval is corrected, the start time of the first measurement interval is maintained. From this viewpoint, it may be understood that a special process or an exceptional process is applied for the first measurement interval. Based on such an understanding, inherently, second and subsequent measurement intervals are the correction targets.

The actual start time and the actual completion time for each of the second and subsequent measurement intervals are computed as follows. In the following, a parameter i is an integer greater than or equal to 2.

The actual start time of an ith measurement interval is set to a time identical to the actual completion time of an (i-1)th measurement interval. With this configuration, the remainder time is eliminated. The actual completion time of the ith measurement interval is specified by dividing a time length from the actual start time of the ith measurement interval to the completion time (completion time before the correction) of the ith measurement interval by the cycle time applied to the ith measurement interval. Specifically, the actual completion time is specified by multiplying the quotient obtained by the division described above by the cycle time. Alternatively, the actual completion time is specified by subtracting the remainder obtained by the division described above from the completion time of the ith measurement interval.

The above-described computation is repeated while the parameter i is incremented by 1, so that start times Xa2 to Xa5 and completion times Ya2 to Ya5 are corrected in order, from the second measurement interval to the last measurement interval. That is, from the second measurement interval to the last measurement interval, actual start times Xb2 to Xb5 and actual completion times Yb2 to Yb5 are determined in order (refer to reference numeral 123).

In FIG. 5, packets 116, 118, and 120 which are represented in gray are packets that are added as a result of the correction described above. In the illustrated example configuration, 3 measurement sequences are added.

According to the above-described correction, the remainder time is eliminated, and, at the same time, the measurement time can be increased. Reference numeral 122 indicates plot timings for the plurality of detection values. According to the above-described correction, a problem that the plot spacing is locally increased due to the influences of the remainder time can be prevented. That is, the quality of the compound peak waveform which is displayed can be improved.

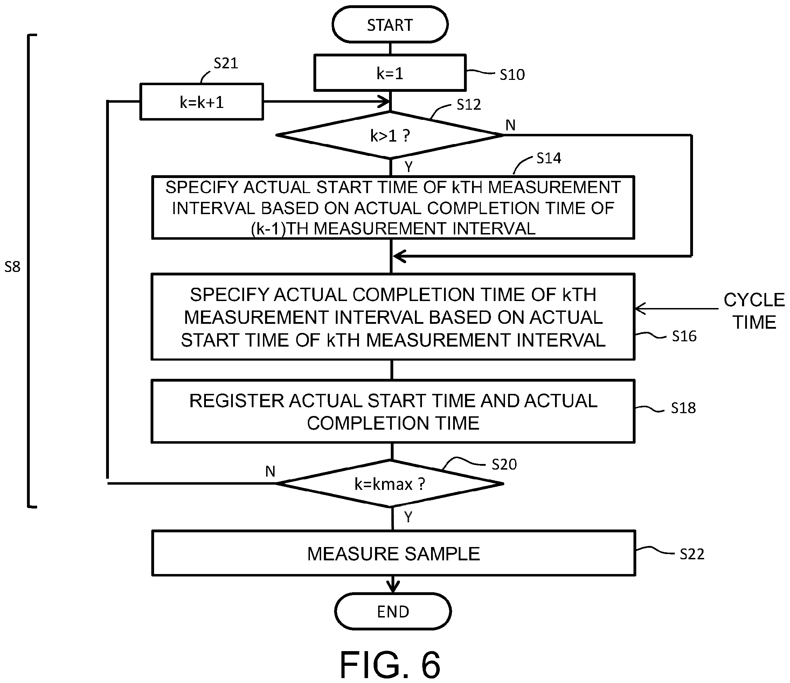

FIG. 6 shows an example operation according to the embodiment of the present disclosure. FIG. 6 shows the function of the correction unit shown in FIG. 1. S8 indicates a correction step, and S22 indicates a sample measurement step.

In S10, a parameter k, which is a count value, is initialized. That is, 1 is substituted into k. The parameter k is an integer greater than or equal to 1. In S12, it is judged whether or not k is greater than 1. When k=1, S16 is executed. For example, for the first measurement interval, in S16, the start time before the correction is assumed to be the actual start time, and the actual completion time is specified based on the actual start time and the cycle time.

For second and subsequent measurement intervals, S14 is executed. In S14, an actual start time of the kth measurement interval is specified based on the actual completion time of the (k-1)th measurement interval. Specifically, the actual start time of the kth measurement interval is made to coincide with the actual completion time of the (k-1)th measurement interval. Then, in S16, the actual completion time is specified for the kth measurement interval, based on the actual start time and the cycle time.

In S18, the actual start time and the actual completion time are registered in the measurement interval table. In S20, it is judged whether or not the parameter k has reached a maximum value kmax of the number of the measurement interval. When the parameter k has not reached the maximum value kmax, in S21, the parameter k is incremented by 1, and the steps from S12 are again executed. When the parameter k has reached the maximum value kmax, in S22, measurement of the sample is executed. The maximum value kmax is stored in the memory 34.

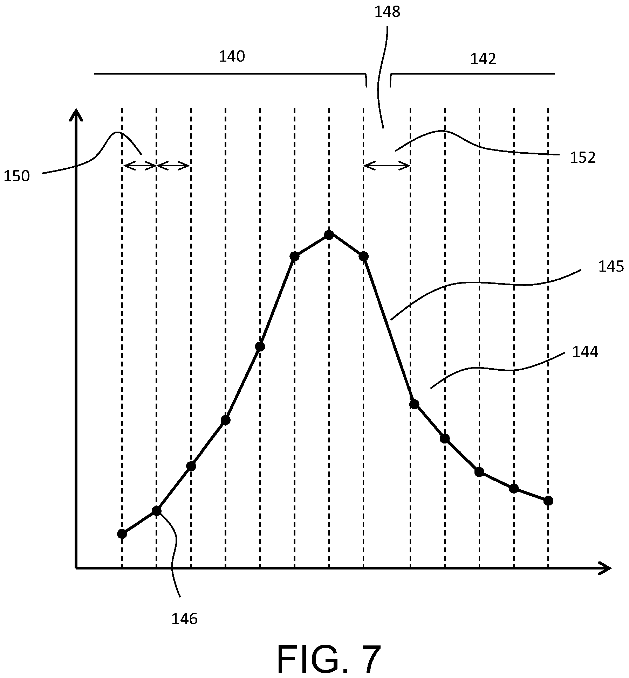

FIG. 7 shows a compound peak 144 of a comparative example. The horizontal axis is the retention time axis, and the vertical axis is an intensity axis. Each point 146 shows a detection value. A remainder time 148 exists between a certain measurement interval 140 and a next measurement interval 142. Reference numeral 150 shows a plot spacing in the measurement interval 140. The plot spacing is identical to the plot spacing in the next measurement interval 142. Due to the influences of the remainder time 148, a large plot spacing 152 is caused in the compound peak 144. The plot spacing 152 is larger than the plot spacing 150. At a position where the large plot spacing 152 is caused, smoothness of the waveform is reduced (refer to reference numeral 145).

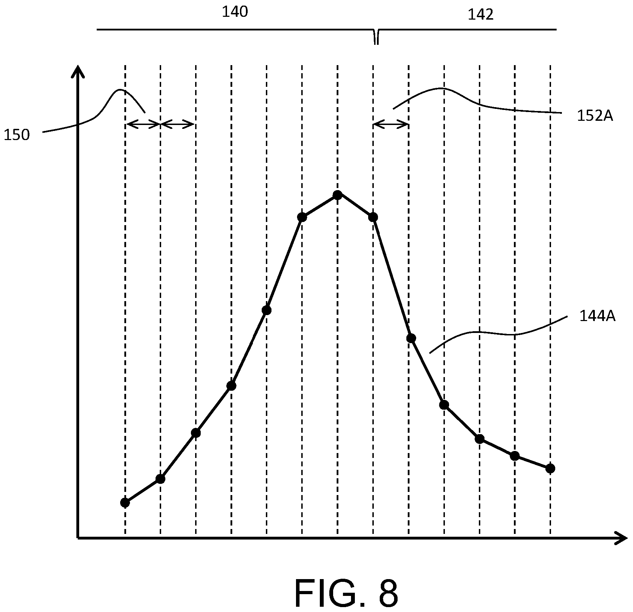

FIG. 8 shows a compound peak 144A according to the embodiment of the present disclosure. The horizontal axis is the retention time axis and the vertical axis is the intensity axis. With the elimination of the remainder time, a plot spacing 152A at a transitioning part of two measurement intervals is equal to the plot spacing 150. The compound peak 144A is smooth as a whole.

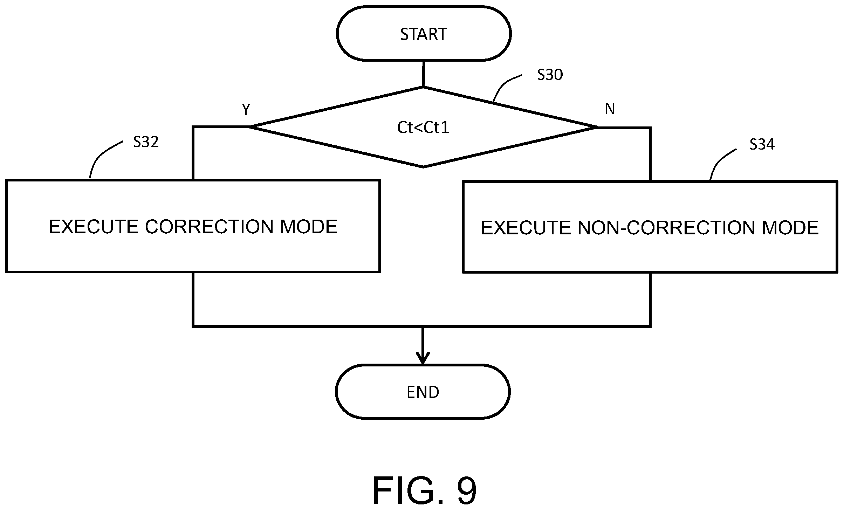

As shown in FIG. 9, in the mass spectrometry apparatus according to the embodiment of the present disclosure, the correction mode and the non-correction mode are selected according to the circumstances. More specifically, when a common cycle time is determined over a plurality of measurement intervals, the correction mode or the non-correction mode is selected based on the common cycle time.

In S30, a common cycle time Ct is compared with a threshold Ct1. When the common cycle time Ct is smaller than the threshold Ct1, in S32, the correction mode is executed. In the correction mode, as already described, the start time and the completion time of each measurement interval are corrected. On the other hand, when the common cycle time Ct is greater than the threshold Ct1, in S34, the non-correction mode is executed. In the non-correction mode, the start time and the completion time of each measurement interval are employed as-is.

When the common cycle time is large, if the remainder time is uniformly eliminated, the amount of correction becomes large, and a problem may be caused in that the group of measurement intervals after the correction is significantly different from the planned group of measurement intervals. As shown in FIG. 9, by selecting the correction mode or the non-correction mode according to the magnitude of the common cycle time, the remainder time can be eliminated within a range of not causing the above-described problem.

Alternatively, the correction mode or the non-correction mode may be selected for each measurement interval, according to the magnitude of the cycle time applied to the measurement interval. Alternatively, the correction mode or the non-correction mode may be selected according to other judgment criteria.

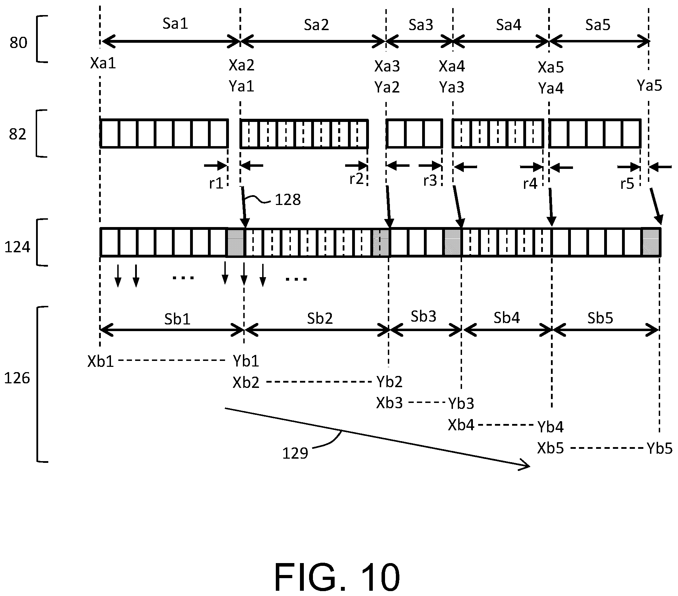

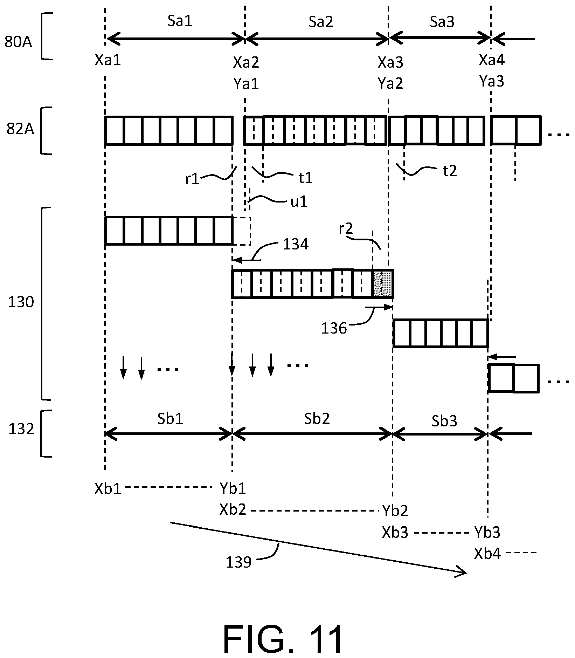

Next, alternative configurations will be described. FIG. 10 shows an extension scheme, as a first alternative configuration. FIG. 11 shows a selection scheme, as a second alternative configuration. In FIGs. 10 and 11, elements similar to the elements shown in FIG. 4 are assigned the same reference numerals, and will not be repeatedly described.

In FIG. 10, the group of measurement intervals 80 before the correction and five packet arrays 82 before the correction are identical to those shown in FIG. 4. Reference numeral 124 indicates 5 packet arrays after the correction. Reference numeral 126 indicates a group of measurement intervals after the correction.

The first measurement interval Sa1 is first set as a processing target. The start time Xa1 before the correction is determined as the actual start time Xb1. A quotient P is determined by dividing a time length from the actual start time Xb1 to the completion time Ya1 before the correction by the cycle time applied in the first measurement interval Sa1. An actual completion time Yb1 is specified by adding 1 to the quotient P, and multiplying (P+1) by the cycle time. The actual completion time Yb1 is a time which is later than the completion time Ya1 before the correction by an amount of extension.

The second and subsequent measurement intervals are processed as follows. The parameter i is an integer greater than or equal to 2.

The actual start time of the ith measurement interval is made to coincide with the actual completion time of the (i-1)th measurement interval (refer to reference numeral 128). With this configuration, the remainder time is eliminated. Next, a quotient P is specified by dividing a time length from the actual start time of the ith measurement interval to the completion time of the ith measurement interval by the cycle time applied to the ith measurement interval. An actual measurement time is computed by multiplying (P+1) by the cycle time. The actual completion time is specified as a point in time in which the actual measurement time has elapsed from the actual start time.

The above-described computation is repeated while the parameter i is incremented by 1, to correct the start times Xa2 to Xa5 and the completion times Ya2 to Ya5 in order, from the second measurement interval to the last measurement interval. That is, from the second measurement interval to the last measurement interval, the actual start times Xb2 to Xb5 and the actual completion times Yb2 to Yb5 of respective measurement intervals are specified in order (refer to reference numeral 129). A plurality of packets represented in gray show packets (measurement sequences) added under the extension scheme.

In the second alternative configuration shown in FIG. 11, reference numeral 80A shows a group of measurement intervals before the correction. The group of measurement intervals 80A before the correction has a plurality of measurement intervals Sa1 to Sa3 arranged on the retention time axis. Reference numeral 82A indicates a plurality of packet arrays before the correction. Reference numeral 130 indicates a plurality of packet arrays after the correction. Reference numeral 132 indicates a group of measurement intervals after the correction.

In the second alternative configuration, the front-shortening scheme or the extension scheme is adaptively chosen for each measurement interval. More specifically, in the first measurement interval Sa1, a time length from the start time Xa1 (= actual start time Xb1) to the completion time Ya1 is divided by the cycle time applied to the first measurement interval Sa1. A quotient Q is thus specified. The cycle time is multiplied by the quotient Q, to specify the actual measurement time. A point in time in which the actual measurement time has elapsed from the start time Xa1 is an expected measurement completion time. A difference between the expected measurement completion time and the completion time Ya1 is specified as a remainder time r1.

In the illustrated example configuration, the remainder time r1 caused at the end of the first measurement interval Sa1 is compared with a time t1 from the start time Xa2 to a first reference time (normally, the cycle time) in the second measurement interval Sa2. When (r1<t1), the front-shortening scheme is chosen, and, when (r1>t1), the extension scheme is chosen. In the illustrated example configuration, the front-shortening scheme is chosen between the first measurement interval Sa1 and the second measurement interval Sa2 (refer to reference numeral 134).

Similar to the above, for the second measurement interval Sa2 also, the remainder time r2 is computed. The remainder time r2 is compared with a time t2 from the start time Xa2 to a first reference time in the third measurement interval Sa3. When (r2<t2), the front-shortening scheme is chosen, and, when (r2>t2), the extension scheme is chosen. In the illustrated example configuration, the extension scheme is chosen between the second measurement interval Sa2 and the third measurement interval Sa3 (refer to reference numeral 136). A gray packet shows an added packet. A similar process is sequentially applied to other measurement intervals.

Alternatively, as the reference time with which the remainder times r1 and r2 are compared, time information other than that described above may be employed. For example, another measurement completion time may be expected by multiplying (Q+1) by the cycle time, and a difference u1 between the other measurement completion time thus computed and the completion time of the measurement interval may be set as the reference time. In this case, the front-shortening scheme is chosen when (r1<u1), and the extension scheme is chosen when (r1>u1). The difference u1 corresponds to the amount of extension. That is, in this configuration, the amount of front shortening and the amount of extension are compared with each other.

As described, in the second alternative configuration also, the start time and the completion time of each measurement interval are corrected in order, from the second measurement interval to the last measurement interval. That is, the actual start time and the actual completion time of each measurement interval are determined in order, from the second measurement interval to the last measurement interval (refer to reference numeral 139).

According to the correction method described above, no wasteful time is caused between two cycle measurement intervals which are timewise adjacent to each other. Further, the start time and the completion time of each cycle measurement interval are optimized. When the front-shortening scheme is chosen as the correction scheme, the amount of computation can be reduced, and control can be simplified.

In the embodiment described above, a mass spectrometer is used having a first mass analyzer which selects a precursor ion and a second mass analyzer which selects a product ion generated from the precursor ion, but alternatively, a mass spectrometer having only a single mass analyzer may be employed. When qualitative analysis or quantitative analysis of a plurality of compounds generated from the sample is to be executed using such a mass spectrometer, the start time and the completion time of each cycle measurement interval may be corrected so as to prevent occurrence of a blank period between two cycle measurement intervals which are timewise adjacent to each other. The cycle measurement in this case is executed according to the SIM mode.

## Claims

1. A mass spectrometry apparatus comprising:
a first table (44) for managing a plurality of compound peak observation periods which are set on a retention time axis;
a second table (46) for managing a plurality of cycle measurement intervals which are set on the retention time axis based on the plurality of compound peak observation periods; and
a processor (30) configured to correct a start time and a completion time of each of the cycle measurement intervals so as to prevent occurrence of a blank period between two cycle measurement intervals which are timewise adjacent to each other, to thereby determine an actual start time and an actual completion time of each of the cycle measurement intervals.

2. The mass spectrometry apparatus according to claim 1, wherein
the processor (30) is further configured to, while incrementing a parameter i by 1, wherein i is an integer greater than or equal to 2:
determine an actual start time of an ith cycle measurement interval based on an actual completion time of an (i-1)th cycle measurement interval; and
determine an actual completion time of the ith cycle measurement interval according to the actual start time of the ith cycle measurement interval and a cycle time applied to the ith cycle measurement interval.

3. The mass spectrometry apparatus according to claim 2, wherein
the processor (30) is further configured to:
determine the actual completion time of the ith cycle measurement interval at a time before a completion time of the ith cycle measurement interval.

4. The mass spectrometry apparatus according to claim 2, wherein
the processor (30) is further configured to:
determine the actual completion time of the ith cycle measurement interval at a time after a completion time of the ith cycle measurement interval.

5. The mass spectrometry apparatus according to claim 2, wherein
the processor (30) is further configured to:
compute a difference time between a completion time expected in the ith cycle measurement interval and a start time of the (i+1)th cycle measurement interval; and
choose a method of determining the actual completion time of the ith cycle measurement interval based on the difference time.

6. The mass spectrometry apparatus according to claim 5, wherein
the processor (30) is further configured to:
determine the actual completion time of the ith cycle measurement interval at a time before a completion time of the ith cycle measurement interval when a first method is chosen as the method; and
determine the actual completion time of the ith cycle measurement interval at a time after a completion time of the ith cycle measurement interval when a second method is chosen as the method.

7. The mass spectrometry apparatus according to claim 1, wherein
the processor (30) has a function to execute a correction mode and a function to execute a non-correction mode,
in the correction mode, the start time and the completion time of each of the cycle measurement intervals are corrected so as to prevent occurrence of the blank period, so that the actual start time and the actual completion time of each of the cycle measurement intervals are determined, and
in the non-correction mode, the start time and the completion time of each of the cycle measurement intervals are employed as-is, without being corrected.

8. The mass spectrometry apparatus according to claim 7, wherein
the processor (30) is configured to select the correction mode or the non-correction mode based on the cycle time applied to each of the cycle measurement intervals.

9. The mass spectrometry apparatus according to claim 8, wherein
the processor (30) is configured to:
select the correction mode when the cycle time is smaller than a threshold; and
select the non-correction mode when the cycle time is greater than the threshold.

10. The mass spectrometry apparatus according to any one of claims 1 to 9, further comprising:
a first mass analyzer (20) that applies first mass analysis on ions generated from a sample;
a collision cell (22) that accumulates and discharges ions that have passed through the first mass analyzer;
a second mass analyzer (24) that applies second mass analysis on ions discharged from the collision cell; and
a detector (26) that detects ions that have passed through the second mass analyzer, wherein
the processor (30) is configured to control operations of the first mass analyzer (20), the collision cell (22), and the second mass analyzer (24) according to a measurement sequence applied to each of the cycle measurement intervals.

11. A mass analysis method comprising:
a step (30) of setting a plurality of cycle measurement intervals on a retention time axis based on a plurality of compound peak observation periods which are set on the retention time axis; and
a step (30, S8) of correcting a start time and a completion time of each of the cycle measurement intervals so as to prevent occurrence of a blank period between two cycle measurement intervals which are timewise adjacent to each other, to thereby determine an actual start time and an actual completion time of each of the cycle measurement intervals.

12. A program executed on an information processing apparatus, the program comprising:
a function (30) of setting a plurality of cycle measurement intervals on a retention time axis based on a plurality of compound peak observation periods which are set on the retention time axis; and
a function (42) of correcting a start time and a completion time of each of the cycle measurement intervals so as to prevent occurrence of a blank period between two cycle measurement intervals which are timewise adjacent to each other, to thereby determine an actual start time and an actual completion time of each of the cycle measurement intervals.
